# EUROPEAN PATENT APPLICATION

(11) **EP 2 233 001 A2**
(43) Date of publication of application: **29.09.2010**
(21) Application number: 10164227.0
(22) Date of filing: 02.09.2008
(51) Int. Cl.: A01N 43/653, A01N 3/00, A01N 3/02, A23B 7/154

(54) **Post-harvest treatment**

(30) Priority: 12.09.2007 EP 07116248
(62) Divisional of application: 08785786.8
(71) Applicant: Bayer CropScience AG, 40789 Monheim (DE)
(72) Inventor: Häuser-Hahn, Isolde, Dr., 51375 Leverkusen (DE); Davies, Peter, Howard, Muntinlupa City (PH); Wachendorff-Neumann, Ulrike, Dr., 56566 Neuwied (DE); Kirsch, Klaus, Dr., 04779-900 Sao Paulo (BR); Ebbinghaus, Dirk, Dr., 42119 Wuppertal (DE)

(57) **Abstract**

The present invention relates to methods for the protection of harvested fruit, cutflowers or vegetables against decay caused by certain storage diseases or disorders expressed in storage conditions. In particular the invention relates to the application of certain fungicidal active compounds to protect harvested fruit, cutflowers or vegetables against phytopathogenic fungi.

## Description

The present invention relates to methods for the protection of harvested fruit, cutflowers or vegetables against decay caused by certain storage diseases or disorders expressed in storage conditions. In particular the invention relates to the application of certain fungicidal active compounds to protect harvested fruit, cutflowers or vegetables against phytopathogenic fungi.

The purpose of any pre-harvest plant protection program for fruit, cutflowers and vegetables is to prevent the development of diseases that might impair the final quality of the fruit, cutflowers and vegetables and to obtain adequate production yields. The system for post-harvest application of plant protection products on fruit, cutflowers and vegetables during packing aims to safeguard the health of the fruit and vegetables during the period of storage and transport to the final consumer in the countries in the northern hemisphere.

To date, for example, only few techniques have been used for preventing the disease *Botrytis cinerea*, and their common denominator is gassing with sulphur dioxide (SO₂). Gassing with SO₂ only controls the disease *Botrytis cinerea* at the time of application - it does not have a residual effect. With this traditional treatment based on SO₂ gassing, e.g. grapes can be maintained in acceptable conditions for a period of 30 days. However, fruit exporters are looking for alternatives to provide storage in good conditions for a period of 45 to 90 days. This would enable them to plan exports with a broader time spread, making it possible to obtain better prices and greater trading profitability.

It is already known that several fungicidal active compounds can be used to prevent post-harvest damages of fruit or vegetables. EP-A 0 972 4450 relates to a method for treatment of fruit and vegetables in post-harvest conditions for the purpose of achieving their preservation; the method comprises cooling the fruit to the core and then treating it with a shower consisting of an aqueous composition for treatment by immersion, preliminary treatment of the aqueous composition with fungicide by means of thiabendazole, a terpene compound, 2-phenylphenol and its salts and enilconazole, at a temperature from 40 to 60°C.

Furthermore, the use of a new system of post-harvest application of plant protection products is known from WO 2007/009474, where post-harvest electrostatic spraying of fungicides, in particular of fenhexamid is disclosed.

Also imazalil, fludioxonil and pyrimethanil are already known for post-harvest treatment (cf. WO 2005/074684, Journal of Agricultural Food Chemistry 2007, 55, 825-831 and Postharvest Biology and Technology 2006, 42, 75-85).

Since, moreover, the environmental and economic requirements imposed on modern-day fungicides are continually increasing, with regard, for example, to the spectrum of activity, toxicity, selectivity, application rate, formation of residues, and favorable preparation ability, and since, furthermore, there may be problems, for example, with resistances developing to known active compounds, a constant task is to develop new fungicide agents which in some areas at least have advantages over their known counterparts. Therefore, there is still a need to find and/or develop other fungicides for post-harvest treatment.

It has now been found, surprisingly, that certain known fungicides, in particular strobilurine or (tri)azole fungicides, may be used for post-harvest treatment of fruit and vegetables for the treatment of post-harvest and/or storage diseases. The invention furthermore relates to a method of combating certain post-harvest and/or storage diseases by treatment of the crops infested with these diseases by certain fungicides or mixtures thereof.

The fungicides are highly active against a broad spectrum of storage diseases with low application rates reducing the risk for workers and meeting the demand for quality and safe food covering residues. The plant compatibility is very good that is no damage to the outer surface or soft tissue of fruit and vegetables have been observed under various storage conditions with different controlled atmosphere systems in respect to temperature and humidity. In contrast, the visual appeal of the fruit was enhanced. The fungicidal properties of the compounds enable their use in different application systems like dipping, drenching, dump tank, spraying, fogging, brushing, packaging and coatings like wax and electrostatic and other targeted applications.

Another advantage is that while using the fungicides the control of post-harvest and/or storage diseases is achieved for a longer period to allow transport of the harvested fruit or vegetables over long distances.

Accordingly, the present invention relates to the use of at least one fungicide, selected from the group consisting of
(a) trifloxystrobin, fluoxastrobin, kresoxim-methyl, metominostrobin, orysastrobin, enestrobin and fenamidone, and salts thereof,
(b) bitertanol, bromuconazole, cyproconazole, difenoconazole, epoxiconazole, fenbuconazole, fenpropidin, fenpropimorph, fluquinconazole, flusilazole, flutriafol, metconazole, penconazole, propiconazole, prothioconazole, spiroxamine, tebuconazole, triadimefon, triadimenol, and salts thereof,
(c) bixafen [N-(3',4'-dichloro-5-fluoro-1,1'-biphenyl-2-yl)-3-(difluoromethyl)-1-methyl-1H-pyrazole-4-carboxamide], carboxin, 3-(difluoromethyl)-l-methyl-N-[1,2,3,4-tetrahydro-9-(1-methylethyl)-1,4-methanonaphthalen-5-yl]-1H-pyrazole-4-carboxamide (isopyrazam), fluopicolide, fluopyram [(N-{2-[3-chloro-5-(trifluoromethyl)pyridin-2-yl]ethyl}-2-(trifluoromethyl)-benzamide)], flutolanil, furametpyr, penthiopyrad, thifluzamide, N-[2-(1,3-dimethylbutyl)-phenyl]-5-fluoro-1,3-dimethyl-1H-pyrazole-4-carboxamide, N-{2-[1,1'-bi(cyclopropyl)-2-yl]-phenyl}-3-(difluoromethyl)-1-methyl-1H-pyrazole-4-carboxamide, 1-methyl-N-[2-(1,1,2,2-tetrafluoroethoxy)phenyl]-3-(trifluoromethyl)-1H-pyrazole-4-carboxamide, 2-chloro-N-[4'-(3,3-dimethylbut-1-yn-1-yl)biphenyl-2-yl]pyridine-3-carboxamide, 3-(difluoromethyl)-1-methyl-N-[2-(1,1,2,2-tetrafluoroethoxy)phenyl]-1H-pyrazole-4-carboxamide, 3-(difluoromethyl)-N-[(9R)-9-isopropyl-1,2,3,4-tetrahydro-1,4-methanonaphthalen-5-yl]-1-methyl-1H-pyrazole-4-carboxamide, 3-(difluoromethyl)-N-[(9S)-9-isopropyl-1,2,3,4-tetrahydro-1,4-methanonaphthalen-5-yl]-1-methyl-1H-pyrazole-4-carboxamide, 3-(difluoromethyl)-N-[4'-(3,3-dimethyl-but-1-yn-1-yl)biphenyl-2-yl]-1-methyl-1H-pyrazole-4-carboxamide and salts thereof,
(d) cyprodinil, mepanipyrim, fluazinam, and salts thereof,
(e) fosetyl-Al, iprodione, propineb, tolylfluanid and salts thereof,
to protect harvested fruit, cutflowers or vegetables against phytopathogenic fungi.

The invention furthermore relates to a method of combating post-harvest and/or storage diseases by treating the fruit, cutflowers or vegetables with at least one fungicide selected from the group consisting of
(a) trifloxystrobin, fluoxastrobin, kresoxim-methyl, metominostrobin, orysastrobin, enestrobin and fenamidone, and salts thereof,
(b) bitertanol, bromuconazole, cyproconazole, difenoconazole, epoxiconazole, fenbuconazole, fenpropidin, fenpropimorph, fluquinconazole, flusilazole, flutriafol, metconazole, penconazole, propiconazole, prothioconazole, spiroxamine, tebuconazole, triadimefon, triadimenol, and salts thereof,
(c) bixafen [N-(3',4'-dichloro-5-fluoro-1,1'-biphenyl-2-yl)-3-(difluoromethyl)-1-methyl-1H-pyrazole-4-carboxamide], carboxin, 3-(difluoromethyl)-l-methyl-N-[1,2,3,4-tetrahydro-9-(1-methylethyl)-1,4-methanonaphthalen-5-yl]-1H-pyrazole-4-carboxamide (isopyrazam), fluopicolide, fluopyram [(N-{2-[3-chloro-5-(trifluoromethyl)pyridin-2-yl]ethyl}-2-(trifluoromethyl)-benzamide)], flutolanil, furametpyr, penthiopyrad, thifluzamide, N-[2-(1,3-dimethylbutyl)-phenyl]-5-fluoro-1,3-dimethyl-1H-pyrazole-4-carboxamide, N-{2-[1,1'-bi(cyclopropyl)-2-yl]-phenyl}-3-(difluoromethyl)-1-methyl-1H-pyrazole-4-carboxamide, 1-methyl-N-[2-(1,1,2,2-tetrafluoroethoxy)phenyl]-3-(trifluoromethyl)-1H-pyrazole-4-carboxamide, 2-chloro-N-[4'-(3,3-dimethylbut-1-yn-1-yl)biphenyl-2-yl]pyridine-3-carboxamide, 3-(difluoromethyl)-1-methyl-N-[2-(1,1,2,2-tetrafluoroethoxy)phenyl]-1H-pyrazole-4-carboxamide, 3-(difluoromethyl)-N-[(9R)-9-isopropyl-1,2,3,4-tetrahydro-1,4-methanonaphthalen-5-yl]-1-methyl-1H-pyrazole-4-carboxamide, 3-(difluoromethyl)-N-[(9S)-9-isopropyl-1,2,3,4-tetrahydro-1,4-methanonaphthalen-5-yl]-1-methyl-1H-pyrazole-4-carboxamide, 3-(difluoromethyl)-N-[4'-(3,3-dimethyl-but-1-yn-1-yl)biphenyl-2-yl]-1-methyl-1H-pyrazole-4-carboxamide and salts thereof,
(d) cyprodinil, mepanipyrim, fluazinam, and salts thereof.
(e) fosetyl-Al, iprodione, propineb, tolylfluanid and salts thereof.

Within this application "post-harvest treatment" is to be understood in a very broad sense. On the one hand it means literally the treatment of fruit or vegetables after the fruit and vegetables have been harvested. For post-harvest treatment the fruit or vegetable is treated with (e.g. with using the method and apparatus disclosed in WO 2005/009474), dipped or tank dumped or drenched into a liquid, brushed with, fumigated, painted, fogged (warm or cold), or the fruit may be coated with a waxy or other composition.

According to the invention, post-harvest and storage diseases may be caused for example by the following fungi:
Colletotrichum spp., e.g. Colletotrichum musae, Colletotrichum gloeosporioides, Colletotrichum coccodes; Fusarium spp., e.g. Fusarium semitectum, Fusarium moniliforme, Fusarium solani, Fusarium oxysporum; Verticillium spp., e.g. Verticillium theobromae; Nigrospora spp.; Botrytis spp., e.g. Botrytis cinerea; Geotrichum spp., e.g. Geotrichum candidum; Phomopsis spp., Phomopsis natalensis; Diplodia spp., e.g. Diplodia citri; Alternaria spp., e.g. Alternaria citri, Alternaria alternata; Phytophthora spp., e.g. Phytophthora citrophthora, Phytophthora fragariae, Phytophthora cactorum, Phytophthora parasitica; Septoria spp., e.g. Septoria depressa; Mucor spp., e.g. Mucor piriformis; Monilinia spp., e.g. Monilinia fructigena, Monilinia laxa; Venturia spp., e.g. Venturia inaequalis, Venturia pyrina; Rhizopus spp., e.g. Rhizopus stolonifer, Rhizopus oryzae; Glomerella spp., e.g. Glomerella cingulata; Sclerotinia spp., e.g. Sclerotinia fruiticola; Ceratocystis spp., e.g. Ceratocystis paradoxa; Penicillium spp., e.g. Penicillium funiculosum, Penicillium expansum, Penicillium digitatum, Penicillium italicum; Gloeosporium spp., e.g. Gloeosporium album, Gloeosporium perennans, Gloeosporium fructigenum, Gloeosporium singulata; Phlyctaena spp., e.g. Phlyctaena vagabunda; Cylindrocarpon spp., e.g. Cylindrocarpon mali; Stemphyllium spp., e.g. Stemphyllium vesicarium; Phacydiopycnis spp., e.g. Phacydiopycnis malirum; Thielaviopsis spp., e.g. Thielaviopsis paradoxy; Aspergillus spp., e.g. Aspergillus niger, Aspergillus carbonarius; Nectria spp., e.g. Nectria galligena; Pezicula spp.

According to the invention, post-harvest storage disorders are for example scald, scorch, softening, senescent breakdown, lenticel spots, bitter pit, browning, water core, vascular breakdown, CO₂ injury, CO₂ deficiency and O₂ deficiency.

Fruit, cutflower and vegetables to be treated according to the invention are particularly selected from cereals, e.g. wheat, barley, rye, oats, rice, sorghum and the like; beets, e.g. sugar beet and fodder beet; pome and stone fruit and berries, e.g. apples, pears, plums, peaches, almonds, cherries, strawberries, raspberries and blackberries; leguminous plants, e.g. beans, lentils, peas, soy beans; oleaginous plants, e.g. rape, mustard, poppy, olive, sunflower, coconut, castor-oil plant, cocoa, ground-nuts; cucurbitaceae, e.g. pumpkins, gherkins, melons, cucumbers, squashes; fibrous plants, e.g. cotton, flax, hemp, jute; citrus fruit, e.g. orange, lemon, grapefruit, mandarin; tropical fruit, e.g. papaya, passion fruit, mango, carambola, pineapple, banana; vegetables, e.g. spinach, lettuce, asparagus, brassicaceae such as cabbages and turnips, carrots, onions, tomatoes, potatoes, hot and sweet peppers; laurel-like plants, e.g. avocado, cinnamon, camphor tree; or plants such as maize, tobacco, nuts, coffee, sugar-cane, tea, grapevines, hops, rubber plants, as well as ornamental plants, e.g. cutflowers, roses, gerbera and flower bulbs, shrubs, deciduous trees and evergreen trees such as conifers. This enumeration of culture plants is given with the purpose of illustrating the invention and not to delimiting it thereto.

Particularly preferred is the treatment of pome and stone fruit and berries, in particular apples, pears, plums, peaches, almonds, cherries, strawberries, raspberries and blackberries.

Particularly preferred is the treatment of citrus fruit, in particular orange, lemon, grapefruit, mandarin. Particularly preferred is the treatment of tropical fruit, in particular papaya, passion fruit, mango, carambola, pineapple, banana.

Particularly preferred is the treatment of grapevines.

The fungicides mentioned above are all known compounds (cf. e.g. The Pesticide Manual, 13th Edition, British Crop Protection Council, 2003).

According to the invention the fungicides are preferably selected from the group consisting of
(a) trifloxystrobin, fluoxastrobin, kresoxim-methyl, metominostrobin, orysastrobin, enestrobin, and salts thereof,
(b) bitertanol, cyproconazole, difenoconazole, epoxiconazole, fenbuconazole, fenpropidin, fenpropimorph, fluquinconazole, flusilazole, penconazole, propiconazole, prothioconazole, spiroxamine, tebuconazole, triadimefon, triadimenol, and salts thereof,
(c) bixafen [N-(3',4'-dichloro-5-fluoro-1,1'-biphenyl-2-yl)-3-(difluoromethyl)-1-methyl-1H-pyrazole-4-carboxamide], 3-(difluoromethyl)-1-methyl-N-[1,2,3,4-tetrahydro-9-(1-methylethyl)-1,4-methanonaphthalen-5-yl]-1H-pyrazole-4-carboxamide (isopyrazam), fluopicolide, fluopyram [(N-{2-[3-chloro-5-(trifluoromethyl)pyridin-2-yl]ethyl}-2-(trifluoromethyl)benzamide)], penthiopyrad, 1-methyl-N-[2-(1,1,2,2-tetrafluoroethoxy)phenyl]-3-(trifluoromethyl)-1H-pyrazole-4-carboxamide, 2-chloro-N-[4'-(3,3-dimethylbut-1-yn-1-yl)biphenyl-2-yl]pyridine-3-carboxamide, 3-(difluoromethyl)-1-methyl-N-[2-(1,1,2,2-tetrafluoroethoxy)phenyl]-1H-pyrazole-4-carboxamide, 3-(difluoromethyl)-N-[(9R)-9-isopropyl-1,2,3,4-tetrahydro-1,4-methanonaphthalen-5-yl]-1-methyl-1H-pyrazole-4-carboxamide, 3-(difluoromethyl)-N-[(9S)-9-isopropyl-1,2,3,4-tetrahydro-1,4-methanonaphthalen-5-yl]-1-methyl-1H-pyrazole-4-carboxamide, 3-(difluoromethyl)-N-[4'-(3,3-dimethylbut-1-yn-1-yl)biphenyl-2-yl]-1-methyl-1H-pyrazole-4-carboxamide,
(d) cyprodinil, and salts thereof,
(e) fosetyl-Al, iprodione, propineb, tolylfluanid and salts thereof.

According to the invention the fungicides are particularly preferably selected from the group consisting of
(a) trifloxystrobin, fluoxastrobin, and salts thereof,
(b) cyproconazole, difenoconazole, prothioconazole, spiroxamine, tebuconazole, triadimenol, and salts thereof,
(c) bixafen [N-(3',4'-dichloro-5-fluoro-1,1'-biphenyl-2-yl)-3-(difluoromethyl)-1-methyl-1H-pyrazole-4-carboxamide], fluopyram [(N-{2-[3-chloro-5-(trifluoromethyl)pyridin-2-yl]ethyl}-2-(trifluoromethyl)benzamide)], 1-methyl-N-[2-(1,1,2,2-tetrafluoroethoxy)phenyl]-3-(trifluoromethyl)-1H-pyrazole-4-carboxamide, 3-(difluoromethyl)-1-methyl-N-[2-(1,1,2,2-tetrafluoroethoxy)phenyl]-1H-pyrazole-4-carboxamide,
(d) cyprodinil, and salts thereof,
(e) fosetyl-Al, iprodione, tolylfluanid, and salts thereof.

The fungicides used according to the invention are generally applied in form of a composition comprising at least one fungicide as mentioned above. Preferably the fungicidal composition comprises agriculturally acceptable additives, solvents, carriers, surfactants, or extenders.

According to the invention, the term "carrier" denotes a natural or synthetic, organic or inorganic compound with which the active compounds are combined or associated to make it easier to apply, notably to the fruit and vegetables treated according to the invention. This support is thus preferably inert and should be at least agriculturally acceptable. The support may be a solid or a liquid.

Suitable solid carriers are the following: e.g. ammonium salts and natural rock powders, such as kaolins, clays, talcum, chalk, quartz, attapulgite, montmorillonite or diatomaceous earth and synthetic rock powders such as highly disperse silica, aluminium oxide and silicates, oil waxes, solid fertilizers, water, alcohols, preferably butanol, organic solvents, mineral and vegetable oils and essential oils and derivatives thereof; mixtures of such carriers may also be used; suitable solid carriers for granules are: for example crushed and fractionated natural rocks such as calcite, marble, pumice, sepiolite, dolomite and synthetic granules of inorganic and organic powders and granules of organic materials such as paper, sawdust, coconut shells, corn stalks and tobacco stalks; suitable emulsifiers and/or foam-forming agents are: for example non-ionic and anionic emulsifiers, such as polyoxyethylene fatty acid esters, polyoxyethylene fatty alcohol ethers, suitable dispersants are non-ionic and/or ionic substances, for example from the classes comprising alcohol POE and/or POP ethers, acid and/or POP or POE esters, alkyl-aryl and/or POP or POE ethers, fatty and/or POP-POE adducts, POE and/or POP polyol derivatives, POE and/or POP/sorbitan or sugar adducts, alkyl or aryl sulphates, sulphonates and phosphates or the corresponding PO ether adducts. Furthermore, suitable oligomers or polymers, for example based on vinyl monomers, acrylic acid, EO and/or PO alone or in combination with for example (poly-)alcohols or (poly-)amines. Use can also be made of acetic acid, peracetic acid, salicylic acid, acetaldehyde, phosphorous acid, lignin and sulphonic acid derivatives thereof, simple and modified celluloses, aromatic and/or aliphatic sulphonic acids, aromatic and/or aliphatic salicylic acids and adducts thereof with formaldehyde. Suitable as dispersants are for example lignosulphite waste liquors and methylcellulose.

By liquefied gaseous diluents or supports are meant such liquids that are gaseous at normal temperature and under normal pressure, for example, aerosol propellants such as halo hydrocarbons as well as butane, propane, nitrogen and carbon dioxide.

It is possible to use in the formulations adhesives such as carboxymethylcellulose, natural and synthetic powdered, granular or latex-like polymers such as gum arabic, polyvinyl alcohol, polyvinyl acetate and natural phospholipids, such as cephalins and lecithins and synthetic phospholipids. Further additives can be mineral or vegetable oils and waxes, optionally modified.

Suitable extenders are, for example, water, polar and non-polar organic chemical liquids, for example from the classes of the aromatic and non-aromatic hydrocarbons (such as paraffins, alkylbenzenes, alkylnaphthalenes, chlorobenzenes), the alcohols and polyols (which, if appropriate, may also be substituted, etherified and/or esterified), the ketones (such as acetone, cyclohexanone), esters (including fats and oils) and (poly)ethers, the unsubstituted and substituted amines, amides, lactams (such as *N-*alkylpyrrolidones) and lactones, the sulphones and sulphoxides (such as dimethyl sulphoxide).

If the extender used is water, it is also possible to employ, for example, organic solvents as auxiliary solvents. Essentially, suitable liquid solvents are: aromatics such as xylene, toluene or alkylnaphthalenes, chlorinated aromatics and chlorinated aliphatic hydrocarbons such as chlorobenzenes, chloroethylenes or methylene chloride, aliphatic hydrocarbons such as cyclohexane or paraffins, for example petroleum fractions, mineral and vegetable oils, alcohols such as butanol or glycol and also their ethers and esters, ketones such as acetone, methyl ethyl ketone, methyl isobutyl ketone or cyclohexanone, strongly polar solvents such as dimethyl sulphoxide, and also water.

The composition according to the invention may also comprise additional components. In particular, the composition may further comprise a surfactant. The surfactant can be an emulsifier, a dispersing agent or a wetting agent of ionic or non-ionic type or a mixture of such surfactants. Mention may be made, for example, of polyacrylic acid salts, lignosulphonic acid salts, phenolsulphonic or naphthalenesulphonic acid salts, polycondensates of ethylene oxide with fatty alcohols or with fatty acids or with fatty amines, substituted phenols (in particular alkylphenols or arylphenols), salts of sulphosuccinic acid esters, taurine derivatives (in particular alkyl taurates), phosphoric esters of polyoxyethylated alcohols or phenols, fatty acid esters of polyols, and derivatives of the present compounds containing sulphate, sulphonate and phosphate functions, for example alkylaryl polyglycol ethers, alkyl sulphonates, alkyl sulphates, aryl sulphonates, protein hydrolyzates, lignosulphite waste liquors and methyl cellulose. The presence of at least one surfactant is generally essential when the active compound and / or the inert support are water-insoluble and when the vector agent for the application is water. Preferably, surfactant content may be comprised from 5% to 40% by weight of the composition.

Colouring agents such as inorganic pigments, for example iron oxide, titanium oxide, ferrocyanblue, and organic pigments such as alizarin, azo and metallophthalocyanine dyes, and trace elements such as iron, manganese, calcium, magnesium, boron, copper, cobalt, molybdenum and zinc salts can be used.

Optionally, other additional components may also be included, e.g. protective colloids, adhesives, thickeners, thixotropic agents, penetration agents, stabilisers, sequestering agents. More generally, the active compounds can be combined with any solid or liquid additive, which complies with the usual formulation techniques.

In general, the composition used according to the invention may contain from 0.05 to 99% by weight of active compounds, preferably from 1 to 70% by weight, particularly preferably from 10 to 50 % by weight.

The compositions used according to the invention can be used as such, in form of their formulations or as the use forms prepared therefrom, such as aerosol dispenser, capsule suspension, cold fogging concentrate, hot fogging concentrate, encapsulated granule, fine granule, flowable concentrate for seed treatment, ready-to-use solutions, dustable powder, emulsifiable concentrate, emulsion oil in water, emulsion water in oil, macrogranule, microgranule, oil dispersible powder, oil miscible flowable concentrate, oil miscible liquid, froths, paste, seed coated with a pesticide, suspension concentrate (flowable concentrate), suspensions-emulsions-concentrates, soluble concentrate, suspensions, soluble powder, granule, water soluble granules or tablets, water soluble powder for seed treatment, wettable powder, natural and synthetic materials impregnated with active compound, micro-encapsulation in polymeric materials and in jackets for seed, as well as ULV- cold and hot fogging formulations, gas (under pressure), gas generating product, plant rodlet, powder for dry seed treatment, solution for seed treatment, ultra low volume (ULV) liquid, ultra low volume (ULV) suspension, water dispersible granules or tablets, water dispersible powder for slurry treatment.

These formulations are prepared in a known manner by mixing the active compounds or active compound combinations with customary additives, such as, for example, customary extenders and also solvents or diluents, emulsifiers, dispersants, and/or bonding or fixing agent, wetting agents, water repellents, if appropiate siccatives and UV stabilisers, colorants, pigments, defoamers, preservatives, secondary thickeners, adhesives, gibberellins and water as well further processing auxiliaries.

These compositions include not only compositions which are ready to be applied to the plant or seed to be treated by means of a suitable device, such as a spraying or dusting device, but also concentrated commercial compositions which must be diluted before application to the crop.

The active compounds used according to the invention can be used in its commercially available formulations and in the use forms, prepared from these formulations, as a mixture with other active compounds, such as insecticides, attractants, sterilizing agents, bactericides, acaricides, nematicides, fungicides, growth-regulating substances, herbicides, safeners, fertilizers or semiochemicals.

The treatment of plants and plant parts with the active compound according to the invention is carried out directly or by action on their environment, habitat or storage area by means of the normal treatment methods, for example by watering (drenching), drip irrigation, spraying, vaporizing, atomizing, broadcasting, dusting, foaming, spreading-on, and as a powder. It is furthermore possible to apply the active compounds by the ultra-low volume method, or to inject the active compound preparation or the active compound itself into the soil.

As already mentioned above, all plants and their parts can be treated in accordance with the invention. In a preferred embodiment, plant species and plant varieties which are found in the wild or are obtained by traditional biological breeding methods, such as hybridization or protoplast fusion, and parts of the former are treated. In a further preferred embodiment, transgenic plants and plant varieties which have been obtained by recombinant methods, if appropriate in combination with traditional methods (genetically modified organisms) and their parts are treated. The term "parts" or "parts of plants" or "plant parts" has been illustrated above.

Particularly preferably, plants of the plant cultivars which are in each case commercially available or in use are treated according to the invention. Plant cultivars are understood as meaning plants with new properties ("traits") which have been obtained by conventional cultivation, by mutagenesis or else by recombinant DNA techniques. These may be cultivars, breeds, biotypes or genotypes.

Depending on the plant species or plant cultivars, their location and growth conditions (soils, climate, vegetation period, nutrition), the treatment according to the invention may also result in superadditive ("synergistic") effects. Thus, for example, reduced application rates and/or extensions of the activity spectrum and/or an increase in the activity of the substances and compositions that can be used according to the invention, better plant growth, more developed root system, higher resistance of the plant variety or plant cultivar, increased growth of shoots, higher plant vitality, increased tolerance to high or low temperatures, increased tolerance to drought or to water or soil salinity, increased flowering performance, easier harvesting, accelerated maturation, higher harvest yields, larger fruit, increased plant size, greener leaf colour, earlier blossoming, better quality and/or a higher nutritional value of the harvested products, higher sugar concentration in the fruits, better storage stability and/or processability of the harvested products which exceed the effects which were actually to be expected are possible.

The preferred transgenic plants or plant cultivars (i.e. those obtained by genetic engineering) which are to be treated according to the invention include all plants which, as a result of the recombinant modification, received genetic material which imparted particularly advantageous useful properties ("traits") to these plants. Examples of such properties are better plant growth, increased tolerance to high or low temperatures, increased tolerance to drought or to water or soil salinity, increased flowering performance, easier harvesting, accelerated maturation, higher harvest yields, better quality and/or a higher nutritional value of the harvested products, better storage stability and/or processability of the harvested products. Further and particularly emphasized examples of such properties are a better defence of the plants against animal and microbial pests, such as against insects, mites, phytopathogenic fungi, bacteria and/or viruses, and also increased tolerance of the plants to certain herbicidally active compounds. Examples of transgenic plants which may be mentioned are the important crop plants, such as cereals (wheat, rice), maize, soya beans, potatoes, cotton, tobacco, oilseed rape and also fruit plants (with the fruits apples, pears, citrus fruits and grapes), and particular emphasis is given to maize, soya beans, potatoes, cotton, tobacco and oilseed rape. Traits that are emphasized in particular are increased defence of the plants against insects, arachnids, nematodes, slugs and snails as the result of toxins formed in the plants, in particular those formed in the plants by the genetic material from Bacillus thuringiensis (for example by the genes CryIA(a), CryIA(b), CryIA(c), CryIIA, CryIIIA, CryIIIB2, Cry9c, Cry2Ab, Cry3Bb and CryIF and also combinations thereof) (hereinbelow referred to as "Bt plants"). Traits which are also particularly emphasized are the increased defence of plants against fungi, bacteria and viruses by systemic acquired resistance (SAR), systemin, phytoalexins, elicitors and resistance genes and the correspondingly expressed proteins and toxins. Traits that are furthermore particularly emphasized are the increased tolerance of the plants to certain herbicidally active compounds, for example imidazolinones, sulphonylureas, glyphosate or phosphinothricin (for example the "PAT" gene). The genes which impart the desired traits in question can also be present in combination with one another in the transgenic plants. Examples of "Bt plants" which may be mentioned are maize varieties, cotton varieties, soya bean varieties and potato varieties which are sold under the trade names YIELD GARD® (for example maize, cotton, soya beans), KnockOut® (for example maize), StarLink® (for example maize), Bollgard® (cotton), Nucoton® (cotton) and NewLeaf® (potato). Examples of herbicide-tolerant plants which may be mentioned are maize varieties, cotton varieties and soya bean varieties which are sold under the trade names Roundup Ready® (tolerance to glyphosate, for example maize, cotton, soya bean), Liberty Link® (tolerance to phosphinothricin, for example oilseed rape), IMI® (tolerance to imidazolinones) and STS® (tolerance to sulphonylureas, for example maize). Herbicide-resistant plants (plants bred in a conventional manner for herbicide tolerance) which may be mentioned also include the varieties sold under the name Clearfield® (for example maize). Of course, these statements also apply to plant cultivars having these genetic traits or genetic traits still to be developed, which cultivars will be developed and/or marketed in the future.

The dose of active compound/application rate usually applied in the method of treatment according to the invention is generally and advantageously from 0,005 to 70 % by weight, preferably from 0,01 to 20 % by weight, more preferably from 0,05 to 10 % by weight, dependimg on the type of formulation to be selected for specific application purposes.

The doses herein indicated are given as illustrative examples of the method according to the invention. A person skilled in the art will know how to adapt the application doses, notably according to the nature of the plant or crop to be treated.

The combination according to the invention can be used in order to protect plants within a certain time range after the treatment against pests and/or phytopathogenic fungi and/or microorganisms. The time range, in which protection is effected, spans in general one to 28 days, preferably one to 14 days after the treatment.

Furthermore combinations and compositions according to the invention may also be used to reduce the contents of mycotoxins in plants and the harvested plant material and therefore in foods and animal feed stuff made therefrom. Especially but not exclusively the following mycotoxins can be specified: Deoxynivalenole (DON), Nivalenole, 15-Ac-DON, 3-Ac-DON, T2- und HT2- Toxins, Fumonisines, Zearalenone Moniliformine, Fusarine, Diaceotoxyscirpenole (DAS), Beauvericine, Enniatine, Fusaroproliferine, Fusarenole, Ochratoxines, Patuline, Ergotalkaloides und Aflatoxines, which are caused for example by the following fungal diseases: *Fusarium spec*., like *Fusarium acuminatum*, *F. avenaceum, F. crookwellense, F. culmorum, F. graminearum (Gibberella zeae), F. equiseti, F. fujikoroi, F. musarum, F. oxysporum, F. proliferatum, F. poae, F. pseudograminearum, F. sambucinum, F. scirpi, F. semitectum, F. solani, F. sporotrichoides, F. langsethiae, F. subglutinans, F. tricinctum, F. verticillioides* and others but also by *Aspergillus spec*., *Penicillium spec.* like *P. expansum*, *P. digitatum*, *P. italicum*, *Claviceps purpurea, Stachybotrys spec*., *Geotrichum candidum* and others.

### Examples

In Example 1 and Example 2 all compounds except fluopyram were applied as commercially available. 1 weight proportion of fluopyram, however, was mixed with solvents (24.5 w/w acetone, 24.5 w/w dimethylacetamid) and emulsifier (1 w/w), respectively. Afterwards, the product was diluted in water. The concentration used is indicated below.

### Example 1

Apples were dipped in a fungicidal solution and kept in plastic boxes for drying. Afterwards 10 µl of a spore solution of *Penicillium expansum* has been applied to injuries of the cuticle of the fruits. The trial has been assessed at different time intervals after inoculation. The efficacy of the products has been calculated based on the fungal growth of the treated apples with reference to the inoculated untreated control. The efficacy is shown as % Abbott.

**Table 1a)**

| Compound | Dosage | % Efficacy [Abbott] at | | |
|---|---|---|---|---|
| | | 6d | 10d | 14d |
| Tebuconazole [Folicur EW250] | 100g a.i./1000 ltr. | 100 | 100 | 100 |
| untreated control | [% infestation] | [17] | [37] | [53] |

**Table 1b)**

| Compound | Dosage | % Efficacy [Abbott] at | | |
|---|---|---|---|---|
| | | 6d | 10d | 15d |
| Trifloxystrobin [Flint WG50] | 50g a.i./1000 ltr. | | 50 63 | 52 |
| Fluopyram | 100g a.i./1000 ltr. | 93 | 90 | 70 |
| Tolylfluanid [Euparen M WG50] | 750g a.i./1000 ltr. | 64 | 60 | 60 |
| untreated control | [% infestation] | [23] | [50] | [83] |

### Example 2

Apples were dipped in a fungicidal solution and kept in plastic boxes for drying. Afterwards 10µl of a spore solution of *Botrytis cinerea* has been applied to injuries of the cuticle of the fruits. The trial has been assessed at 6d and 10d after inoculation. The efficacy of the products has been calculated based on the fungal growth of the treated apples with reference to the inoculated untreated control. The efficacy is shown as % Abbott.

**Table 2**

| Compound | Dosage | % Efficacy [Abbott] at | |
|---|---|---|---|
| | | 6d | 10d |
| Fluopyram | 100g a.i./1000 ltr | 98 | 96 |
| untreated control | [% infestation] | [70] | [90] |

### Example 3: In vitro Test for the ED₅₀ determination of microorganisms

Cavities of a 96-hole microtiter plates are filled with 10 µl of a solution of test compounds in methanol together with the emulsifier tris (1-phenylethyl)phenol-16-ethoxylate ("PS16"). At the next step, into each cavity 200 µl of liquid potato dextrose medium is pipetted amended with an appropriate concentration of spores or mycelial suspension of the test fungus.

The resulting concentrations of the test compounds in the microtiter cavity are ranging from 50, 5, 0.5 and 0.05 ppm.

The extinction in all cavities is measured by a spectral photometer. The microtiter plates are then transferred for 3-5 days (depending on the fungal growth) onto a shaker at 20°C and 80 % relative humidity. At the end of the incubation time the growth of the test organisms is measured again photometrically to determine the fungal growth. From the resulting dose-response curves the ED₅₀ will be taken. The concentration that is necessary to give 50 % growth inhibition is defined and reported as ED₅₀ value (= Effective Dose that causes 50 % growth inhibition) in ppm (= mg/l).

**Table 3: In vitro Test for the ED₅₀ determination of microorganisms**

| Microorganism | Active compound | ED₅₀ |
|---|---|---|
| Aspergillus carbonarius | Trifloxystrobin | < 0,1 ppm |
| | Pyrimethanil | < 0,1 ppm |
| | Tebuconazole | < 0,1 ppm |
| Aspergillus ochraceus | Trifloxystrobin | < 0,1 ppm |
| Aspergillus niger | Trifloxystrobin | < 0,1 ppm |
| | Fluopyram | < 0,1 ppm |
| | Bixafen | < 0,1 ppm |
| Botrytis cinerea | | 0,4 ppm |
| | Trifloxystrobin | < 0,1 ppm |
| | Bixafen | < 0,1 ppm |
| | | < 0,1 ppm |
| Monilia spp. | Trifloxystrobin | 0,72 ppm |
| Penicillium verrucosum | Trifloxystrobin | < 0,1 ppm |
| | Kresoxim methyl | 1,5 ppm |
| | Bixafen | < 0,1 ppm |
| | Fluopyram | < 0,1 ppm |
| | Pyrimethanil | 0,13 ppm |

## Claims

1. Use of metconazole and salts thereof to protect harvested fruit, cutflowers or vegetables against phytopathogenic fungi.

2. Use according to Claim 1, **characterized in that** diseases are caused by the fungi selected from Colletotrichum spp., e.g. Colletotrichum musae, Colletotrichum gloeosporioides, Colletotrichum coccodes; Fusarium spp., e.g. Fusarium semitectum, Fusarium moniliforme, Fusarium solani, Fusarium oxysporum; Verticillium spp., e.g. Verticillium theobromae; Nigrospora spp.; Botrytis spp., e.g. Botrytis cinerea; Geotrichum spp., e.g. Geotrichum candidum; Phomopsis spp., Phomopsis natalensis; Diplodia spp., e.g. Diplodia citri; Alternaria spp., e.g. Alternaria citri, Alternaria alternata; Phytophthora spp., e.g. Phytophthora citrophthora, Phytophthora fragariae, Phytophthora cactorum, Phytophthora parasitica; Septoria spp., e.g. Septoria depressa; Mucor spp., e.g. Mucor piriformis; Monilinia spp., e.g. Monilinia fructigena, Monilinia laxa; Venturia spp., e.g. Venturia inaequalis, Venturia pyrina; Rhizopus spp., e.g. Rhizopus stolonifer, Rhizopus oryzae; Glomerella spp., e.g. Glomerella cingulata; Sclerotinia spp., e.g. Sclerotinia fruiticola; Ceratocystis spp., e.g. Ceratocystis paradoxa; Penicillium spp., e.g. Penicillium funiculosum, Penicillium expansum, Penicillium digitatum, Penicillium italicum; Gloeosporium spp., e.g. Gloeosporium album, Gloeosporium perennans, Gloeosporium fructigenum, Gloeosporium singulata; Phlyctaena spp., e.g. Phlyctaena vagabunda; Cylindrocarpon spp., e.g. Cylindrocarpon mali; Stemphyllium spp., e.g. Stemphyllium vesicarium; Phacydiopycnis spp., e.g. Phacydiopycnis malirum; Thielaviopsis spp., e.g. Thielaviopsis paradoxy; Aspergillus spp., e.g. Aspergillus niger, Aspergillus carbonarius; Nectria spp., e.g. Nectria galligena; Pezicula spp.

3. Use according to Claims 1 or 2, **characterized in that** fruit and vegetables are selected from cereals, e.g. wheat, barley, rye, oats, rice, sorghum and the like; beets, e.g. sugar beet and fodder beet; pome and stone fruit and berries, e.g. apples, pears, plums, peaches, almonds, cherries, strawberries, raspberries and blackberries; leguminous plants, e.g. beans, lentils, peas, soy beans; oleaginous plants, e.g. rape, mustard, poppy, olive, sunflower, coconut, castor-oil plant, cocoa, ground-nuts; cucurbitaceae, e.g. pumpkins, gherkins, melons, cucumbers, squashes; fibrous plants, e.g. cotton, flax, hemp, jute; citrus fruit, e.g. orange, lemon, grapefruit, mandarin; tropical fruit, e.g. papaya, passion fruit, mango, carambola, pineapple, banana; vegetables, e.g. spinach, lettuce, asparagus, brassicaceae such as cabbages and turnips, carrots, onions, tomatoes, potatoes, hot and sweet peppers; laurel-like plants, e.g. avocado, cinnamon, camphor tree; or plants such as maize, tobacco, nuts, coffee, sugar-cane, tea, grapevines, hops, rubber plants, as well as ornamental plants, e.g. cutflowers, roses, gerbera and flower bulbs, shrubs, deciduous trees and evergreen trees such as conifers.

4. Use according to any of Claims 1 to 3, **characterized in that** fruit and vegetables are selected from pome and stone fruit and berries, in particular apples, pears, plums, peaches, almonds, cherries, strawberries, raspberries and blackberries, citrus fruit, in particular orange, lemon, grapefruit, mandarin, tropical fruit, in particular papaya, passion fruit, mango, carambola, pineapple, banana and of grapevines.

5. Method of combating post-harvest and/or storage diseases by treating the fruit or vegetables with Metconazole and salts thereof.

6. Method according to Claim 5, **characterized in that** diseases are caused by the fungi selected from Colletotrichum spp., e.g. Colletotrichum musae, Colletotrichum gloeosporioides, Colletotrichum coccodes; Fusarium spp., e.g. Fusarium semitectum, Fusarium moniliforme, Fusarium solani, Fusarium oxysporum; Verticillium spp., e.g. Verticillium theobromae; Nigrospora spp.; Botrytis spp., e.g. Botrytis cinerea; Geotrichum spp., e.g. Geotrichum candidum; Phomopsis spp., Phomopsis natalensis; Diplodia spp., e.g. Diplodia citri; Alternaria spp., e.g. Alternaria citri, Alternaria alternata; Phytophthora spp., e.g. Phytophthora citrophthora, Phytophthora fragariae, Phytophthora cactorum, Phytophthora parasitica; Septoria spp., e.g. Septoria depressa; Mucor spp., e.g. Mucor piriformis; Monilinia spp., e.g. Monilinia fructigena, Monilinia laxa; Venturia spp., e.g. Venturia inaequalis, Venturia pyrina; Rhizopus spp., e.g. Rhizopus stolonifer, Rhizopus oryzae; Glomerella spp., e.g. Glomerella cingulata; Sclerotinia spp., e.g. Sclerotinia fruiticola; Ceratocystis spp., e.g. Ceratocystis paradoxa; Penicillium spp., e.g. Penicillium funiculosum, Penicillium expansum, Penicillium digitatum, Penicillium italicum; Gloeosporium spp., e.g. Gloeosporium album, Gloeosporium perennans, Gloeosporium fructigenum, Gloeosporium singulata; Phlyctaena spp., e.g. Phlyctaena vagabunda; Cylindrocarpon spp., e.g. Cylindrocarpon mali; Stemphyllium spp., e.g. Stemphyllium vesicarium; Phacydiopycnis spp., e.g. Phacydiopycnis malirum; Thielaviopsis spp., e.g. Thielaviopsis paradoxy; Aspergillus spp., e.g. Aspergillus niger, Aspergillus carbonarius; Nectria spp., e.g. Nectria galligena; Pezicula spp.

7. Method according to Claim 5 or 6, **characterized in that** fruit and vegetables are selected from cereals, e.g. wheat, barley, rye, oats, rice, sorghum and the like; beets, e.g. sugar beet and fodder beet; pome and stone fruit and berries, e.g. apples, pears, plums, peaches, almonds, cherries, strawberries, raspberries and blackberries; leguminous plants, e.g. beans, lentils, peas, soy beans; oleaginous plants, e.g. rape, mustard, poppy, olive, sunflower, coconut, castor-oil plant, cocoa, ground-nuts; cucurbitaceae, e.g. pumpkins, gherkins, melons, cucumbers, squashes; fibrous plants, e.g. cotton, flax, hemp, jute; citrus fruit, e.g. orange, lemon, grapefruit, mandarin; tropical fruit, e.g. papaya, passion fruit, mango, carambola, pineapple, banana; vegetables, e.g. spinach, lettuce, asparagus, brassicaceae such as cabbages and turnips, carrots, onions, tomatoes, potatoes, hot and sweet peppers; laurel-like plants, e.g. avocado, cinnamon, camphor tree; or plants such as maize, tobacco, nuts, coffee, sugar-cane, tea, grapevines, hops, rubber plants, as well as ornamental plants, e.g. cutflowers, roses, gerbera sand flower bulbs, shrubs, deciduous trees and evergreen trees such as conifers.

8. Method according to any of Claims 5 to 7, **characterized in that** fruit and vegetables are selected from pome and stone fruit and berries, in particular apples, pears, plums, peaches, almonds, cherries, strawberries, raspberries and blackberries, citrus fruit, in particular orange, lemon, grapefruit, mandarin, tropical fruit, in particular papaya, passion fruit, mango, carambola, pineapple, banana and of grapevines.
